# FASCICULE DE BREVET EUROPEEN

(11) **EP 0 891 013 B1**
(45) Date de publication et mention de la délivrance du brevet: **12.04.2006**
(21) Numéro de dépôt: 98410072.7
(22) Date de dépôt: 23.06.1998
(51) Int. Cl.: H01R 13/53, H02B 13/035

(54) **Dispositif de raccordement électrique entre deux cellules à haute tension, et à isolement par un gaz**
Elektrische Anschlussvorrichtung zwischen zwei Gas isolierten Hochspannungszellen
Electrical interconnection device between two high voltage and gas insulation cells

(30) Priorité: 10.07.1997 FR 9709040
(43) Date de publication de la demande: 13.01.1999
(73) Titulaire: SCHNEIDER ELECTRIC INDUSTRIES SAS, 92500 Rueil-Malmaison (FR)
(72) Inventeur: Balsarin, Gabriel, 38050 Grenoble Cedex 09 (FR); Puget, Nicolas, 38050 Grenoble Cedex 09 (FR); Marzocca, Joseph, 38050 Grenoble Cedex 09 (FR)
(74) Mandataire: Ritzenthaler, Jacques

(56) Documents cités:
- EP-A- 0 520 933
- DE-A- 4 310 125
- FR-A- 2 409 622
- US-A- 4 773 872

## Description

L'invention est relative à un dispositif de raccordement électrique entre deux cellules d'appareillage électrique à haute tension logé dans deux cuves métalliques étanches remplies de gaz isolant, notamment de l'hexafluorure de soufre, et comprenant :
- un contact de connexion coopérant à ses extrémités opposées avec une paire d'inserts en matériau conducteur, surmoulés dans des traversées isolantes fixées de manière étanche dans deux ouvertures adjacentes ménagées dans les cloisons métalliques des deux cuves,
- un manchon isolant en matériau élastomère souple entourant coaxialement le contact de connexion et les inserts de raccordement, et ayant deux parties terminales tronconiques prenant appui sur la surface interne de forme conjuguée des traversées,
- et des moyens de rigidification du manchon isolant au niveau de la zone de raccordement du contact de connexion avec les inserts pour empêcher les amorçages électriques internes.

Un dispositif connu du genre mentionné est décrit dans les documents FR-A-1362 997, EP-A-199 249, EP-A-199 208 et EP-A-520 933. Le contact de connexion est formé soit par un élément tubulaire allongé en liaison avec les inserts de raccordement, soit par un ensemble de contacts mâle et femelle disposé dans la zone médiane. Le manchon en élastomère souple peut être rigidifié par un tube métallique conducteur s'étendant coaxialement autour du contact de connexion. Un tel montage connu est bien adapté pour deux cellules ayant des inserts de raccordement bien alignés, ce qui nécessite des tolérances de fabrication très serrées. En cas de mauvais alignement axial des inserts et des traversées, la connexion électrique est soumise à des contraintes mécaniques, avec des risques d'usure prématurée du dispositif de raccordement.

L'objet de l'invention consiste à réaliser un dispositif de raccordement fiable entre deux cellules à haute tension, et à tenue diélectrique élevée.

Le dispositif de raccordement selon l'invention est caractérisé en ce que le contact de connexion est composé d'un plot central rigide en matériau conducteur ayant une longueur axiale correspondant sensiblement à l'écartement entre les deux cellules, et deux pinces d'embrochage articulées sur les extrémités opposées du plot central, et s'étendant sur toute la distance des parties terminales tronconiques du manchon et des moyens de rigidification.

Selon un mode particulier de réalisation, les moyens de rigidification comportent un noyau interne sur lequel est surmoulé le manchon isolant en matériau élastomère souple, le matériau du noyau étant conducteur et ayant une dureté supérieure à celle du matériau du manchon. L'épaisseur du noyau est moins importante dans la partie centrale entourant le plot du contact de connexion pour préserver la souplesse du manchon en cas de défaut d'alignement axial des inserts.

Selon une variante de réalisation préférentielle, les moyens de rigidification sont constitués par l'ajustage sans jeu radial des pinces d'embrochage cylindriques dans la surface interne du manchon, laquelle est recouverte d'une couche de peinture conductrice pour assurer la répartition uniforme du champ électrique. Les deux pinces d'embrochage sont articulées sur des rotules agencées aux extrémités du plot central du contact de connexion.

D'autres avantages et caractéristiques ressortiront plus clairement de la description qui va suivre de trois modes de réalisation, donnés à titre d'exemples non limitatifs, et représentés aux dessins annexés dans lesquels :
- la figure 1 est une vue schématique en coupe d'un dispositif de raccordement selon l'invention,
- la figure 2 montre une vue identique de la figure 1 d'une variante de réalisation.
- la figure 3 représente une autre variante de réalisation.

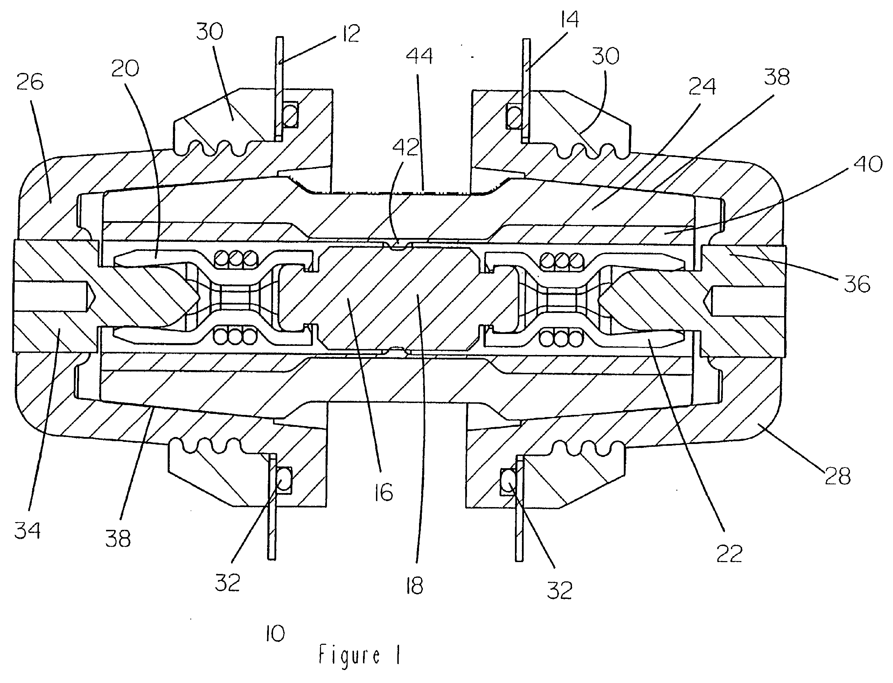

En référence à la figure 1, un dispositif de raccordement 10 à isolation intégrale et à champ dirigé est agencé entre deux cellules d'appareillage à haute tension. La partie active de chaque cellule est logée dans une cuve métallique étanche contenant un gaz isolant, notamment de l'air ou de l'hexafluorure de soufre SF6. Le raccordement s'effectue sur le côté des cuves, à travers les deux cloisons métalliques 12, 14, et doit être étanche pour empêcher les fuites de gaz. Le dispositif de raccordement 10 comporte un contact mobile de connexion 16 subdivisé en trois parties, et comprenant un plot 18 central, conducteur et rigide, supportant deux pinces d'embrochage 20, 22 à ses extrémités opposées. Le contact mobile 16 est agencé dans un manchon 24 en matériau élastomère souple qui s'ajuste dans des traversées 26, 28 creuses en résine époxyde, et du type unipolaire ou tripolaire. Le manchon 24 en matériau élastomère est doté de deux parties terminales de formes tronconiques venant en contact avec les traversées 26, 28, et une partie intermédiaire de liaison de section rétrécie.

Les traversées 26, 28 sont fixées sur les cloisons 12, 14 des cuves correspondantes soit par plusieurs vis, soit par un écrou 30. L'étanchéité au niveau de chaque cuve est assurée par un joint torique 32 plaqué sur la cuve. Un insert conducteur 34, 36 est surmoulé dans chaque traversée 26, 28 et assure la liaison entre le contact mobile 16 et le jeu de barres des cellules adjacentes, en étant traversé par le courant nominal. Chaque insert 34, 36 est doté d'un contact à entrée biseautée facilitant l'embrochage, même si l'alignement des deux cellules n'est pas parfait.

Les traversées 26, 28 peuvent comporter des écrans métalliques enrobés dans la résine pour améliorer la répartition du champ électrique lors du passage du courant.

Pour empêcher les amorçages électriques au niveau du dispositif de raccordement 10, les parties tronconiques du manchon 24 sont comprimées par les traversées 26, 28 au niveau de l'interface 38. A cet effet le manchon 24 doit être renforcé par des moyens de rigidification agissant sur le diamètre intérieur et sur la longueur pénétrant dans les traversées 26, 28.

Dans l'exemple de la figure 1, la rigidité mécanique est obtenue par le surmoulage du manchon 24 en matériau élastomère souple sur un noyau 40 en matériau élastomère plus dur. Le noyau 40 possède une épaisseur moindre au centre pour préserver la souplesse de l'ensemble.

Le matériau élastomère du manchon 24 est isolant, tandis que celui du noyau 40 est conducteur. Le plot 18 conducteur du contact de connexion 16 est mis au potentiel du noyau 40 grâce à une protubérance 42 annulaire venant en contact avec la surface latérale cylindrique du plot central 18.

La longueur de cette partie centrale 18 correspond sensiblement à la longueur de la partie intermédiaire de liaison du manchon 24.

Une couche semi-conductrice 44 reliée à la masse, est déposée ou surmoulée sur l'extérieur de la partie intermédiaire du manchon 24, de manière à former un ensemble à champ dirigé insensible à la pollution extérieure.

Les deux pinces d'embrochage 20, 22 du contact mobile 16 sont articulées sur les extrémités du plot 18 de manière à pouvoir bouger en cas de mauvais alignement des deux cellules.

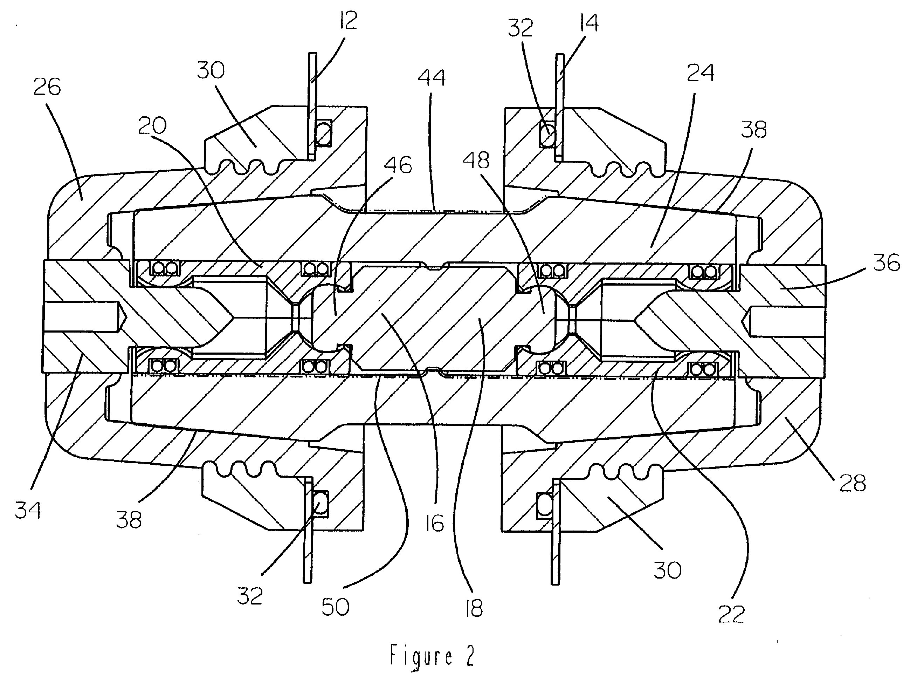

En référence à la figure 2, les moyens de rigidification du manchon 24 sont constitués par les pinces d'embrochage 20, 22 de formes cylindriques ajustées sans jeu radial dans le diamètre intérieur du manchon 24 pour en assurer le maintien. Les deux pinces 20, 22 du type tulipe sont montées avantageusement sur des rotules 46, 48 prévues aux extrémités opposées du plot 18 conducteur du contact mobile 16.

La surface interne du manchon 24 selon l'exemple de la figure 2 est recouverte d'une couche de peinture conductrice 50 permettant une répartition uniforme du champ électrique lors du passage du courant dans le contact mobile 16 de connexion.

Dans les deux exemples de réalisation des figures 1 et 2, la partie centrale 18 rigide du contact de connexion 16 s'étend sensiblement sur une longueur correspondant à l'écartement entre les deux cellules.

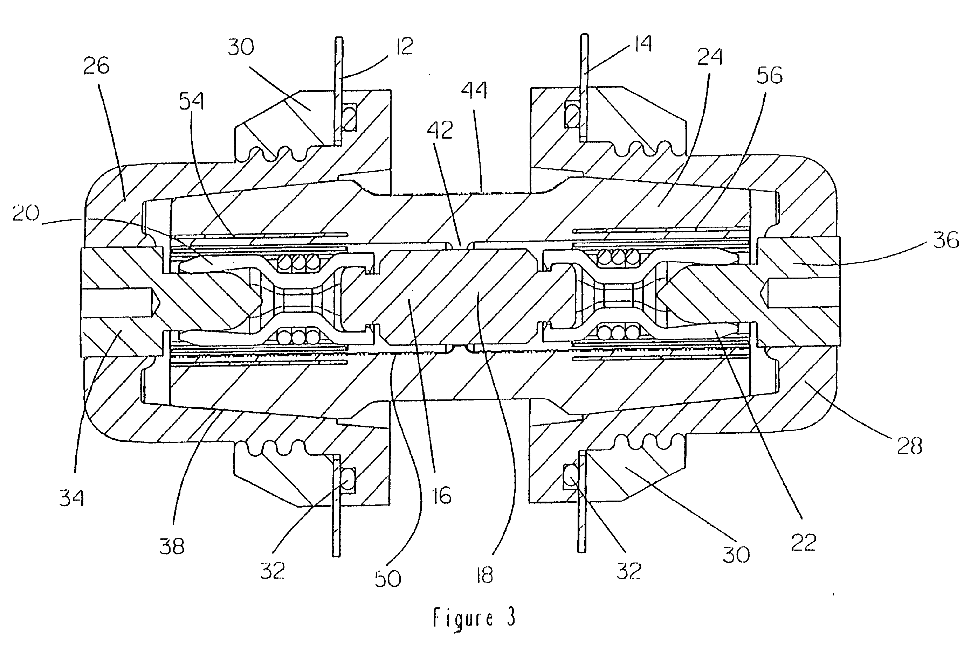

Selon la figure 3, le manchon est rigidifié au moyen d'un tube 54, 56 en matériau isolant, ou conducteur et relié au potentiel de la phase, lequel tube est surmoulé ou adhérisé dans le matériau élastomère de chaque côté du manchon 24.

## Revendications

1. Dispositif de raccordement électrique entre deux cellules d'appareillage électrique à haute tension logé dans deux cuves métalliques étanches remplies de gaz isolant, notamment de l'hexafluorure de soufre, et comprenant:
- un contact de connexion (16) coopérant à ses extrémités opposées avec une paire d'inserts (34, 36) en matériau conducteur, surmoulés dans des traversées (26, 28) isolantes fixées de manière étanche dans deux ouvertures adjacentes ménagées dans les cloisons (12, 14) métalliques des deux cuves,
- un manchon (24) isolant en matériau élastomère souple entourant coaxialement le contact de connexion (16) et les inserts (34, 36) de raccordement, et ayant deux parties terminales tronconiques prenant appui sur la surface interne de forme conjuguée des traversées (26, 28),
- et des moyens de rigidification du manchon (24) isolant au niveau de la zone de raccordement du contact de connexion (16) avec les inserts (34, 36) pour empêcher les amorçages électriques internes,
**caractérisé en ce que** le contact de connexion (16) est composé d'un plot central rigide (18) en matériau conducteur ayant une longueur axiale correspondant sensiblement à l'écartement entre les deux cellules, et deux pinces d'embrochage (20, 22) articulées sur les extrémités opposées du plot central (18), et s'étendant sur toute la distance des parties terminales tronconiques du manchon (24) et des moyens de rigidification.

2. Dispositif de raccordement selon la revendication 1, **caractérisé en ce que** les moyens de rigidification comportent un noyau (40) interne sur lequel est surmoulé le manchon (24) isolant en matériau élastomère souple, le matériau du noyau (40) étant conducteur et ayant une dureté supérieure à celle du matériau du manchon (24).

3. Dispositif de raccordement selon la revendication 2, **caractérisé en ce que** l'épaisseur du noyau (40) est moins importante dans la partie centrale entourant le plot (18) du contact de connexion (16) pour préserver la souplesse du manchon (24) en cas de défaut d'alignement axial des inserts (34, 36).

4. Dispositif de raccordement selon la revendication 1, **caractérisé en ce que** les moyens de rigidification sont constitués par l'ajustage sans jeu radial des pinces d'embrochage (20, 22) cylindriques dans la surface interne du manchon (28), laquelle est recouverte d'une couche de peinture (50) conductrice pour assurer la répartition uniforme du champ électrique.

5. Dispositif de raccordement selon la revendication 1, **caractérisé en ce que** les deux pinces d'embrochage (20, 22) sont articulées sur des rotules (46, 48) agencées aux extrémités du plot central (18) du contact de connexion (16).

6. Dispositif de raccordement selon la revendication 1, **caractérisé en ce que** les moyens de rigidification comportent un tube (54, 56) en matériau isolant ou conducteur, lequel est surmoulé ou adhérisé dans le matériau élastomère de chaque côté du manchon (24).

## Claims

1. A connecting device for electrical connection between two cubicles containing high-voltage electrical switchgear housed in two tight metal enclosures filled with isolating gas, in particular sulphur hexafluoride, and comprising:
- a connecting contact (16) cooperating at its opposite ends with a pair of inserts (34, 36) made of conducting material, over-cast in insulating bushings (26, 28) fixed in hermetically tight manner in two adjacent openings arranged in the metal partitions (12, 14) of the two enclosures,
- an insulating sleeve (24) made of flexible elastomer material coaxially surrounding the connecting contact (16) and the connecting inserts (34, 36) and having two frustum-shaped terminal parts bearing on the internal surface of conjugate shape of the bushings (26, 28),
- and means for strengthening the insulating sleeve (24) at the level of the connection zone of the connecting contact (16) with the inserts (34, 36) to prevent internal electrical flashovers,
**characterized in that** the connecting contact (16) is composed of a rigid central stud (18) made of conducting material having an axial length corresponding substantially to the separation distance between the two cubicles, and two draw-in tulip fingers (20, 22) articulated on the opposite ends of the central stud (18) and extending over the whole distance of the frustum-shaped terminal parts of the sleeve (24) and of the strengthening means.

2. Connecting device according to claim 1, **characterized in that** the strengthening means comprise an internal core (40) whereon the insulating sleeve (24) made of flexible elastomer material is over-cast, the material of the core (40) being conducting and having a greater hardness than that of the material of the sleeve (24).

3. Connecting device according to claim 2, **characterized in that** the thickness of the core (40) is smaller in the central part surrounding the stud (18) of the connecting contact (16) to preserve the flexibility of the sleeve (24) in case of an axial alignment defect of the inserts (34, 36).

4. Connecting device according to claim 1, **characterized in that** the strengthening means are formed by fitting the cylindrical draw-in tulip fingers (20, 22) in the internal surface of the sleeve (24) without radial clearance, which sleeve is covered with a coat of conducting paint (50) to achieve uniform distribution of the electrical field.

5. Connecting device according to claim 1, **characterized in that** the two draw-in tulip fingers (20, 22) are articulated on ball joints (46, 48) arranged at the ends of the central stud (18) of the connecting contact (16).

6. Connecting device according to claim 1, **characterized in that** the strengthening means comprise a tube (54, 56) made of insulating or conducting material, which is over-cast or bonded in the elastomer material on each side of the sleeve (24).

## Patentansprüche

1. Anordnung zur elektrischen Verbindung von zwei Schaltzellen eines elektrischen Hochspannungs-Schaltgeräts, welche Anordnung in zwei gasdichte, mit einem Isoliergas, insbesondere Schwefelhexafluorid gefüllte Metallgefäße eingesetzt ist und
- einen Verbindungskontakt (16), der an seinen einander gegenüberliegenden Enden mit zwei Einsätzen (34, 36) aus einem Leitermaterial zusammenwirkt, welche Einsätze in Isolierstoff-Durchführungen (26, 28) eingeformt sind, die gasdicht in zwei einander gegenüberliegenden, in den Metallwänden (12, 14) der beiden Gefäße ausgebildeten Öffnungen befestigt sind,
- eine Isolierstoffhülse (24) aus einem Weichelastomer, die den Verbindungskontakt (16) und die Anschlusseinsätze (34, 36) koaxial umgibt und zwei konische Endabschnitte aufweist, die sich an der entsprechend geformten Innenfläche der jeweiligen Durchführung (26, 28) abstützen,
- sowie Mittel zur Versteifung der Isolierstoffhülse (24) im Bereich des Übergangs zwischen dem Verbindungskontakt (16) und den Einsätzen (34, 36) umfasst, um interne elektrische Durchschläge zu verhindern,
**dadurch gekennzeichnet, dass** der Verbindungskontakt (16) aus einem biegesteifen, aus einem Leitermaterial bestehenden Mittelbolzen (18) mit einer axialen Länge, die annähernd dem Abstand zwischen den beiden Schaltzellen entspricht, sowie aus zwei Kontaktzangen (20, 22) besteht, die an den einander gegenüberliegenden Enden des Kontaktbolzens (18) gelenkig befestigt sind und sich über die gesamte Länge der konischen Endabschnitte der Hülse (24) sowie der Versteifungsmittel erstrecken.

2. Verbindungsanordnung nach Anspruch 1, **dadurch gekennzeichnet, dass** die Versteifungsmittel einen Innenkern (40) umfassen, auf den die Isolierstoffhülse (24) aus Weichelastomer aufgegossen ist, wobei der Kern (40) aus einem Leitermaterial besteht, das eine größere Härte aufweist als das Material der Hülse (24).

3. Verbindungsanordnung nach Anspruch 2, **dadurch gekennzeichnet, dass** der Kern (40) in dem, den Bolzen (18) des Verbindungskontakts (16) umgebenden Mittelabschnitt eine geringere Wandstärke aufweist, um die Elastizität der Hülse (24) bei ungenauer Axialfluchtung der Einsätze (34, 36) zu gewährleisten.

4. Verbindungsanordnung nach Anspruch 2, **dadurch gekennzeichnet, dass** die Versteifungsmittel dadurch gebildet werden, dass die zylindrischen Kontaktzangen (20, 22) ohne Radialspiel in die Innenfläche der Hülse (24) eingepasst sind, welche Innenfläche mit einem leitenden Farbanstrich (50) versehen ist, um eine gleichmäßige Verteilung des elektrischen Feldes zu gewährleisten.

5. Verbindungsanordnung nach Anspruch 1, **dadurch gekennzeichnet, dass** die beiden Kontaktzangen (20, 22) an Kugelauflagen (46, 48) angelenkt sind, die an den Enden des Mittelbolzens (18) des Verbindungskontakts (16) ausgebildet sind.

6. Verbindungsanordnung nach Anspruch 1, **dadurch gekennzeichnet, dass** die Versteifungsmittel ein Rohr (54, 56) aus Isolierstoff oder einem Leiterwerkstoff umfassen, das auf beiden Seiten der Hülse (24) in den Elastomerkörper eingegossen oder eingesetzt ist.
